# EUROPÄISCHE PATENTSCHRIFT

(11) **EP 1 305 874 B1**
(45) Veröffentlichungstag und Bekanntmachung des Hinweises auf die Patenterteilung: **26.08.2009**
(21) Anmeldenummer: 01951555.0
(22) Anmeldetag: 02.06.2001
(51) Int. Cl.: H02M 7/00

(54) **MODULAR AUFGEBAUTER STROMRICHTER**
MODULAR POWER CONVERTER
REDRESSEUR A CONSTRUCTION MODULAIRE

(30) Priorität: 01.08.2000 DE 10037379
(43) Veröffentlichungstag der Anmeldung: 02.05.2003
(73) Patentinhaber: Converteam GmbH, 12277 Berlin (DE)
(72) Erfinder: JAKOB, Roland, 12524 Berlin (DE); FERNAHL, Michael, 12161 Berlin (DE); BEINHOLD, Georg, 13467 Berlin (DE)
(74) Vertreter: Wörz, Volker Alfred
(86) Internationale Anmeldenummer: PCT/EP2001/006326
(87) Internationale Veröffentlichungsnummer: WO 2002/011273

(56) Entgegenhaltungen:
- FR-A- 2 343 321
- US-A- 604 090
- US-A- 4 141 070
- US-A- 5 737 201

## Beschreibung

Die vorliegende Erfindung betrifft einen in Multilevelschaltung aufgebauten Stromrichter zur Wandlung von Gleichstrom in Wechselstrom oder umgekehrt. Der Stromrichter umfasst mindestens einen Kondensator und mindestens zwei Halbleiter-Leistungsschalter. Der oder jeder Kondensator weist ein Anschlusspaar zum Anschluss des Kondensators an mindestens zwei Halbleiter-Leistungsschalter auf.

Stromrichter in Multilevelschaltung sind bspw. aus der US 5,737,201 bekannt. Dort werden insbesondere die theoretischen Grundlagen einer Multilevelschaltung beschrieben. Eine Multilevelschaltung erlaubt einen modularen Aufbau eines Stromrichters. Jedes der Module umfasst mindestens zwei Halbleiter-Leistungsschalter und mindestens einen zwischen den Leistungsschaltern angeordneten Kondensator. Die Besonderheit der Multilevelschaltung besteht darin, dass die Kondensatoren nicht alle auf demselben Potential liegen, sondern auf verschiedene Potentiale bezogen werden können (sog."floating capacitors"). Eine Zwischenkreisspannung wird derart an mehrere "floating capacitors" weitergegeben, dass sich die Spannungsbeanspruchung eines Halbleiter-Leistungsschalters als Differenz der Spannung zweier Kondensatoren ergibt.

Nach dem Stand der Technik weisen die in Stromrichtern eingesetzten Kondensatoren lediglich ein Anschlusspaar auf. Das Anschlusspaar ist an die Halbleiter-Leistungsschalter eines ersten Moduls angeschlossen. An die Halbleiter Leistungsschalter eines weiteren Moduls wird der Kondensator von dem Anschlusspaar aus über eine zusätzliche elektrische Verbindung angeschlossen. Diese zusätzliche elektrische Verbindung sollte zur Entlastung der Halbleiter Leistungsschalter möglichst niederinduktiv ausgebildet sein. Auf das Problem einer möglichst niederinduktiven elektrischen Verbindung zwischen den Kondensatoren und den Halbleiter Leistungsschaltern wird in der US 5,737,201 nicht näher eingegangen.

Ganz allgemein lässt sich eine möglichst niederinduktive elektrische Verbindung durch besondere konstruktive Maßnahmen erzielen. So führt bspw. eine Verringerung einer von einem Kommutierungsstromkreis eines Moduls mit einer senkrechten Komponente durchströmten Fläche zu einer geringeren Induktivität der elektrischen Verbindung. Durch einen möglichst breit ausgebildeten Leiter zwischen den Kondensatoren und den Halbleiter-Leistungsschaltern und durch einen möglichst geringen Abstand zwischen Hin- und Rückleiter kann die Induktivität deutlich verringert werden. Eine niederinduktive elektrische Verbindung zwischen den Kondensatoren und den Halbleiter-Leistungsschaltern ist bzgl. Auslegung, Genauigkeit und Lebensdauer des Stromrichters bestimmten Grenzen unterworfen.

Um eine konstruktiv relativ leicht realisierbare niederinduktive elektrische Verbindung zwischen den Kondensatoren und den Leistungsschaltern zu ermöglichen, ist es aus der EP 0 944 163 AI bekannt, die Kondensatoren eines Stromrichters in zwei zu teilen und eine Hälfte eines Kondensators den Halbleiter-Leistungsschaltern eines ersten Moduls des Stromrichters und die andere Hälfte des Kondensators den Leistungsschaltern eines anderen Moduls zuzuordnen. Zur Verbindung der Kondensatorhälften mit den Leistungsschaltern der zugeordneten Module werden spezielle, als Schienenpakete (sog. Bus Bars) ausgebildete niederinduktive elektrische Leiter eingesetzt. Die Schienenpakete besitzen bspw. einen laminierten Aufbau aus zwei als Leiter dienenden Kupferplatten mit einer dazwischen angeordneten Platte oder Folie aus einem Festkörperisolator. Aufgrund von sog. Teilentladungen zwischen den Kupferplatten ist der Festkörperisolator einer Alterung unterworfen, die eine eingeschränkte Lebensdauer des Schienenpakets zur Folge hat. Außerdem sind als Schienenpakete ausgebildete niederinduktive Leiter problematisch in der Handhabung (durch mechanische Beanspruchung der Schienenpakete kann deren niedrige Induktivität beeinträchtigt werden) und sehr teuer.

Ein weiterer Nachteil des aus der EP 0 944 163 Al bekannten Stromrichters besteht bei Stromrichtern geringerer Leistung, bei denen ein einziges Modul mit einem Kondensator und zwei Leistungsschaltern ausreichen würde. Auch bei solchen Stromrichtern mit nur einem Kondensator wird der Kondensator in zwei Kondensatorhälften unterteilt, was die Herstellungskosten dieser bekannten Stromrichter in die Höhe treibt.

Aus der FR 2 343 321 A1 ist ein Hochspannungskondensator mit einer hohen Resonanzfrequenz bekannt. Dieser Kondensator weist zwei gegenüberliegende Anschlusskontakte auf. Jeder Anschlusskontakt umfasst einen flachen Abschnitt mit mehreren Löchern zum Anschluss einer niederinduktiven Verbindung.

Es ist eine Aufgabe der vorliegenden Erfindung, einen Stromrichter der eingangs genannten Art dahingehend auszugestalten und weiterzubilden, dass eine möglichst niederinduktive, langlebige und kostengünstige elektrische Verbindung zwischen den Kondensatoren und den Leistungsschaltern realisierbar ist.

Zur Lösung dieser Aufgabe schlägt die Erfindung ausgehend von dem Stromrichter der eingangs genannten Art vor, dass der oder jeder Kondensator mindestens ein weiteres Anschlusspaar zum Anschluss des Kondensators an mindestens zwei Halbleiter-Leistungsschalter oder an ein Gleichstromnetz aufweist und dass in einem Abstand zu mindestens einer Außenseite des oder jeden Kondensators mindestens eine Kühlplatte angeordnet ist.

Erfindungsgemäß wird also an dem oder jedem Kondensator mindestens ein weiteres Anschlusspaar nach außen geführt. Über das eine Anschlusspaar kann der Kondensator an mindestens zwei Halbleiter-Leistungsschalter eines ersten Moduls und über jedes weitere Anschlusspaar an mindestens zwei weitere Halbleiter-Leistungsschalter von weiteren Modulen oder an ein Gleichstromnetz angeschlossen werden. Die Anschlusspaare können an einer beliebigen Stelle aus dem Kondensator herausgeführt werden. Es empfiehlt sich jedoch, die Anschlusspaare dort herauszuführen, wo konstruktiv bedingt weitere Module des Stromrichters angeordnet sind.

Die in Stromrichtern eingesetzten Kondensatoren weisen in ihrem Inneren üblicherweise zwei parallel zueinander verlaufende Kontaktbahnen auf, die sich nahezu über die gesamte Kondensatorlänge erstrecken und zwischen denen mehrere parallel geschaltete Kondensatorelemente angeordnet sind. Aufgrund der Anforderungen bzgl. geringer Induktivität sind diese Kontaktbahnen als niederinduktive elektrische Leiter ausgebildet. Ausgehend von den Kontaktbahnen können an nahezu beliebigen Stellen Anschlusspaare aus dem Kondensator herausgeführt werden. Als niederinduktive Leiter zum Anschluss der Kondensatoren an die Halbleiter Leistungsschalter der einzelnen Module werden also niederinduktive elektrische Verbindungen verwendet, die in Kondensatoren für Stromrichter in der Regel sowieso vorgesehen sind.

Da bei dem erfindungsgemäßen Stromrichter auf die relativ teuren Schienenpakete (Bus Bars) verzichtet werden kann, können die Herstellungs- und Montagekosten des Stromrichters entscheidend reduziert werden.

Mittels der Kühlplatte wird bei einer Luftkühlung eine besonders einfache Führung der Kühlluft entlang der Kondensatoren ermöglicht. Der Abstand zwischen den Außenseiten des Kondensators und der Kühlplatte kann also als Kühlkanal genutzt werden, durch den die Kühlluft seitlich entlang des Kondensators geführt werden kann.

Gemäß einer vorteilhaften Weiterbildung der vorliegenden Erfindung wird vorgeschlagen, dass die Anschlusspaare eines Kondensators auf verschiedenen Seiten des Kondensators aus diesem herausgeführt sind. Der Kondensator kann baulich zwischen den Modulen angeordnet werden, an deren Halbleiter Leistungsschalter er angeschlossen werden soll. Dadurch ist ein besonders kompakter Aufbau des Stromrichters möglich.

Gemäß einer bevorzugten Ausführungsform der vorliegenden Erfindung wird vorgeschlagen, dass der oder jeder Kondensator zwei Anschlusspaare aufweist, die auf gegenüberliegenden Seiten des Kondensators aus diesem herausgeführt sind. Dadurch kann der Stromrichter aus mehreren übereinander bzw. nebeneinander angeordneten Modulen aufgebaut werden. Dieser längliche Aufbau des Stromrichters hat den Vorteil einer großen Übersichtlichkeit der einzelnen Komponenten, wodurch die Montage und Wartung vereinfacht wird. Der längliche Aufbau bringt besondere Vorteile bei einer Kühlung der Halbleiter-Leistungsschalter mit Luft, da die Kühlluft - anders als bei komplex und verwinkelt aufgebauten Stromrichtern - problemlos durch den länglich aufgebauten Stromrichter geführt werden kann. Außer mit Luft kann der erfindungsgemäße Stromrichter natürlich auch auf beliebig andere Weise gekühlt werden.

Vorteilhafterweise weist jedes Anschlusspaar zwei Anschlusskontakte mit jeweils mindestens einem Anschlusselement auf, wobei die Anschlusselemente jeweils eines Anschlusskontakts über einen niederinduktiven flächigen Schienenleiter an einen Anschluss eines Halbleiter-Leistungsschalters angeschlossen sind. Um die Induktivität der Verbindung zwischen dem Kondensator und den Leistungsschaltern zu verringern, kann ein Anschlusskontakt eines Anschlusspaars mehrere parallel zueinander verlaufende Anschlusselemente aufweisen. Die Schienenleiter bestehen bspw. aus Kupfer und sind luftisoliert. Zwischen hin- und rückführenden Schienenleitern kann eine Isolatorplatte angeordnet werden, um einen Kurzschluss durch Fremdkörper zu vermeiden und/oder bei einer Luftkühlung die Kühlluft entlang der Komponenten des Stromrichters durch diesen zu führen. Die Isolatorplatte besteht bspw. aus Kunststoff.

Vorteilhafterweise weisen Oberseite und Unterseite des oder jeden Kondensators die mindestens eine Außenseite des oder jeden Kondensators überragende Bereiche auf, an denen die mindestens eine Kühlplatte befestigt ist. Dies ist eine besonders einfache Konstruktion der Kühlkanäle für die Kühlluft, die jedoch eine besonders wirkungsvolle Luftführung ermöglicht.

Der Stromrichter ist vorzugsweise als ein Wechselrichter ausgebildet, der eine Gleichspannung in eine Wechselspannung wandelt. Alternativ kann der erfindungsgemäße Stromrichter auch als ein Gleichstromsteller ausgebildet sein. Der erfindungsgemäße Stromrichter eignet sich insbesondere zum Einsatz im Mittel- und Hochspannungsbereich.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Fig. 1: ein vereinfachtes Schaltbild eines dreiphasigen Wechselrichters;
- Fig. 2: ein vereinfachtes Schaltbild für eine Phase eines in Multilevelschaltung ausgebildeten Stromrichters;
- Fig. 3: einen Kondensator eines erfindungsgemäßen Stromrichters gemäß einer bevorzugten Ausführungsform in einer Ansicht im Schnitt von vorne;
- Fig. 4: den Kondensator aus Fig. 3 in einer Draufsicht; und
- Fig. 5: einen erfindungsgemäßen in Multilevelschaltung aufgebauten Stromrichter gemäß einer bevorzugten Ausführungsform in einer Ansicht von vorne.

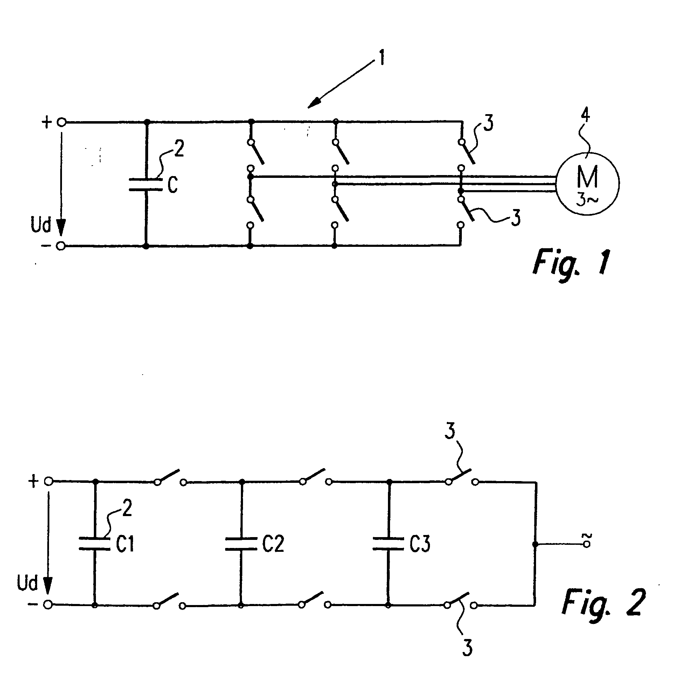

In Fig. 1 ist ein Schaltbild eines aus dem Stand der Technik bekannten Wechselrichters dargestellt. An dem Wechselrichter liegt eingangsseitig eine Gleichspannung U_d an, die durch den Wechselrichter in eine Wechselspannung, bspw. eine 3-Phasen-Drehspannung, umgewandelt wird. Die Gleichspannung U_d liegt an einem Kondensator 2 des Wechselrichters an. Für jede Phase der Wechselspannung weist der Wechselrichter eine Serienschaltung aus zwei Leistungsschaltern 3 auf. Als Leistungsschalter 3 können bspw. Transistoren, Thyristoren, GTOs (Gate Turn-Off Thyristors) oder vorzugsweise IGBTs (Insulated-Gate Bipolar Transistors) eingesetzt werden. Die Serienschaltungen der Leistungsschalter 3 für die einzelnen Phasen sind parallel zueinander und parallel zu dem Kondensator 2 angeordnet, so dass auch an den Serienschaltungen der Leistungsschalter 3 die Gleichspannung U_d anliegt. Durch periodisches Öffnen und Schließen der Leistungsschalter 3 wird die Gleichspannung U_d in die 3-Phasen Drehspannung umgesetzt. Durch eine bestimmte Ansteuerung der Leistungsschalter 3 kann die Frequenz und die Grundschwingungsamplitude der Drehspannung variiert werden. Die Drehspannung kann einem Verbraucher, bspw. einem Drehstrommotor 4, zugeführt werden.

In Fig. 2 ist ein ebenfalls aus dem Stand der Technik bekanntes Schaltbild für eine Phase eines als Wechselrichter ausgebildeten Stromrichters 1 dargestellt. Der Wechselrichter ist in einer sog. Multilevelschaltung aufgebaut. Stromrichter 1 in Multilevelschaltung sind bspw. aus der US 5,737,201 bekannt, wo insbesondere die theoretischen Grundlagen der Multilevelschaltung und nicht praktische Realisierungsformen von Stromrichtern in Multilevelschaltung beschrieben werden. Die Realisierung eines Stromrichters 1 in Multilevelschaltung kann konstruktive Probleme mit sich bringen, da die elektrischen Verbindungen zwischen den Kondensatoren 2 und den Leistungsschaltern 3 möglichst niederinduktiv ausgebildet sein sollten. Eine Möglichkeit der Realisierung eines Stromrichters 1 in Multilevelschaltung ist aus der EP 0 944 163 A1 bekannt. Auf diese beiden Druckschriften wird ausdrücklich Bezug genommen.

Eine Multilevelschaltung erlaubt einen modularen Aufbau des Stromrichters 1. Bei dem vorliegenden Ausführungsbeispiel ist der Stromrichter 1 als eine 4-Level-Schaltung ausgebildet, d. h. er weist drei Module für jede Phase auf. Jedes der Module umfasst zwei Halbleiter-Leistungsschalter 3 und einen zwischen den Leistungsschaltern 3 angeordneten Kondensator 2. In dem Ausführungsbeispiel aus Fig. 2 liegt an dem Kondensator C1 die volle Gleichspannung U_d, an dem Kondensator C2 2/3 der Gleichspannung U_d und an dem Kondensator C3 1/3 der Gleichspannung U_d an.

Die Besonderheit der Multilevelschaltung besteht darin, dass die Kondensatoren 2 nicht alle auf demselben Potential liegen, sondern auf verschiedene Potentiale bezogen werden können (sog. "floating capacitors"). Eine Zwischenkreisspannung eines Moduls wird derart an mehrere "floating capacitors" weitergegeben, dass sich die Spannungsbeanspruchung eines Halbleiter-Leistungsschalters 3 als Differenz der Spannung zweier Kondensatoren 2 ergibt.

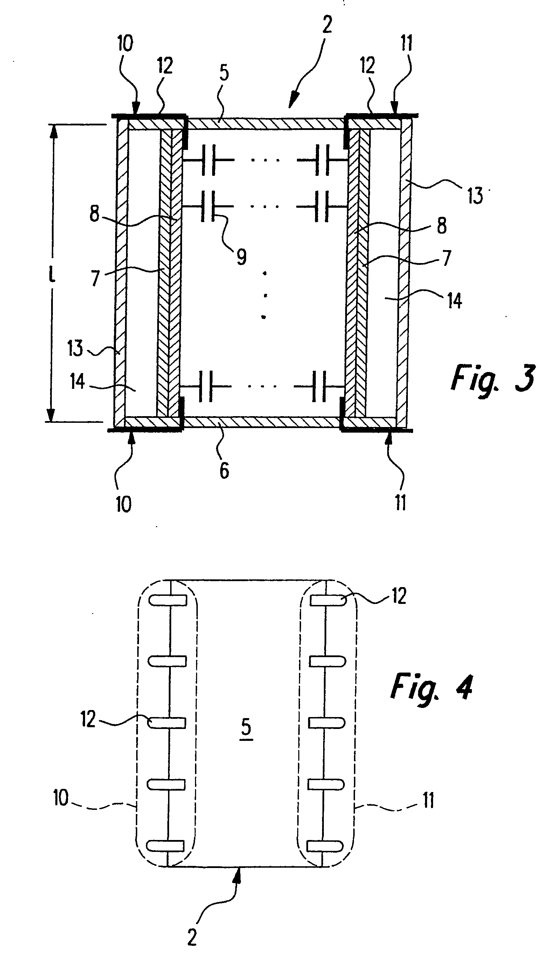

Fig. 3 zeigt einen Kondensator 2, wie er in dem erfindungsgemäßen Stromrichter 1 eingesetzt wird, in einer Ansicht im Schnitt von vorne. Der Kondensator 2 weist ein Gehäuse bestehend aus einer Oberseite 5, einer Unterseite 6 und Außenseiten 7 auf. Im Inneren des Gehäuses 5, 6, 7 verlaufen zwei Kontaktbahnen 8 entlang der Außenseiten 7 parallel zueinander. Die Kontaktbahnen 8 erstrecken sich nahezu über die gesamte Länge 1 des Kondensators 2. Zwischen den Kontaktbahnen 8 sind mehrere Kondensatorelemente 9 angeordnet, die zusammengenommen die gewünschte Kapazität des Kondensators 2 ergeben.

Aufgrund der Anforderungen bzgl. einer geringen Induktivität innerhalb des Kondensators 2 sind die Kontaktbahnen 8 als niederinduktive elektrische Leiter ausgebildet. Ausgehend von den Kontaktbahnen 8 können an nahezu beliebigen Stellen des Kondensators 2 Anschlusspaare aus dem Gehäuse 5, 6, 7 des Kondensators 2 herausgeführt werden. Es empfiehlt sich jedoch, die Anschlusspaare dort aus dem Gehäuse 5, 6, 7 herauszuführen, wo konstruktiv bedingt weitere Module des Stromrichters 1 angeordnet sind. Die Anschlusspaare umfassen jeweils mehrere Anschlusskontakte 10, 11.

In dem vorliegenden Ausführungsbeispiel sind zwei Anschlusspaare 10, 11 an gegenüberliegenden Seiten, genauer gesagt an der Oberseite 5 und der Unterseite 6, aus dem Gehäuse 5, 6, 7 des Kondensators 2 geführt. Jedes Anschlusspaar weist zwei Anschlusskontakte 10, 11 auf. Zur Verringerung der Induktivität der elektrischen Verbindung zwischen dem Kondensator 2 und den Leistungsschaltern 3 weist jeder Anschlusskontakt 10, 11 mehrere, im vorliegenden Fall fünf, Anschlusselemente 12 auf (vgl. Fig. 4).

Die Oberseite 5 und die Unterseite 6 des Kondensators 2 stehen über die Außenseiten 7 hinaus. An den überstehenden Bereichen ist von außen eine Kühlplatte 13 befestigt, so dass sich zwischen den Außenseiten 7 und den Kühlplatten 13 Kühlkanäle 14 ergeben, durch die Kühlluft seitlich entlang des Kondensators 2 geführt werden kann.

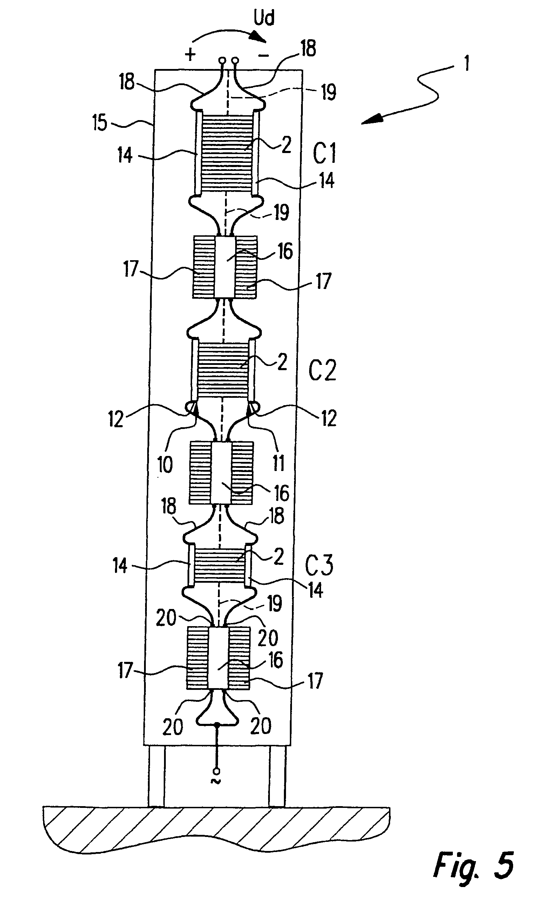

In Fig. 5 ist ein erfindungsgemäßer Stromrichter 1 dargestellt. Die dargestellten Komponenten des Stromrichters 1 sind die in Fig. 2 dargestellten Komponenten der Schaltung für eine Phase des Stromrichters 1. Der Stromrichter 1 weist ein Gehäuse 15 auf. In dem Gehäuse 15 sind abwechselnd ein Kondensator 2 und zwei zu einer Leistungsschaltereinheit 16 zusammengefasste Halbleiter-Leistungsschalter 3 übereinander angeordnet. Seitlich an der Leistungsschaltereinheit 16 ist jeweils ein mit Kühlrippen versehener Kühlkörper 17 befestigt. Die Kühlrippen des Kühlkörpers 17 erstrecken sich in die gleiche Richtung wie die Kühlkanäle 14 der Kondensatoren 2. Die Abmessungen der Kondensatoren 2 hängen im wesentlichen von den Kapazitäten und von der Spannung der Kondensatoren 2 und damit auch von der Anzahl der Kondensatorelemente 9 ab. So ist bspw. der Kondensator C1 größerbauend als der Kondensator C2 und der Kondensator C2 wiederum größerbauender als der Kondensator C3.

Der modulare Aufbau des Stromrichters 1 ist in Fig. 5 besonders gut zu erkennen. Der kompakte modulare Aufbau des erfindungsgemäßen Stromrichters 1 ist aufgrund des oben beschriebenen Aufbaus der Kondensatoren 2 mit einem Anschlusspaar 10, 11 an der Oberseite 5 und einem weiteren Anschlusspaar 10, 11 an der Unterseite 6 des Kondensators 2 überhaupt erst möglich. Die elektrische Verbindung zwischen den Anschlusspaaren 10, 11 der Kondensatoren 2 und Anschlüssen 20 der Leistungsschaltereinheiten 16 oder einem Gleichstromnetz erfolgt mittels flächiger niederinduktiver Schienenleiter 18. Die Schienenleiter 18 bestehen aus einem elektrisch leitfähigen Material, bspw. aus Kupfer, und sind in dem vorliegenden Ausführungsbeispiel luftisoliert. Auf den Einsatz teuerer Schienenpakete (sog. Bus Bars) - wie beim Stand der Technik üblich - kann bei dem erfindungsgemäßen Stromrichter 1 verzichtet werden. Außer mit Luft können die Schienenleiter 18 natürlich auch mit beliebig anderen Materialien isoliert werden.

Um einen Kurzschluss zwischen zwei benachbarten Schienenleitern 18 einer elektrischen Verbindung durch in das Gehäuse 15 gelangte Fremdkörper (z. B. vergessenes Werkzeug, Insekten, Tiere) o. ä. zu vermeiden, kann zwischen zwei benachbarten Schienenleitern 18 eine Isolatorplatte 19 eingefügt werden. Die Isolatorplatten 19 sind in Fig. 5 gestrichelt dargestellt. Sie bestehen aus einem Festkörperisolator, bspw. aus Kunststoff.

Der erfindungsgemäße Stromrichter 1 kommt mit einem Minimum an zusätzlichen niederinduktiven flächigen Schienenleitern 18 zum Anschluss der Kondensatoren 2 an die Halbleiter-Leistungsschalter 3 aus, da der größte Teil an elektrischen Verbindungen zwischen den Kondensatoren 2 und den Leistungsschaltern 3 durch die niederinduktiven Kontaktbahnen 8 innerhalb der Kondensatoren 2 ausgeführt ist.

Der erfindungsgemäße modulare Aufbau des Stromrichters 1 ermöglicht eine besonders kostengünstige Montage und Wartung der Komponenten (insbesondere der Kondensatoren 2 und der Leistungsschalterelemente 16) des Stromrichters 1. Die luftisolierten niederinduktiven flächigen Schienenleiter 18 sind besonders langlebig und können auch hohe Spannungen problemlos transportieren. Aufgrund seines Aufbaus ist der erfindungsgemäße Stromrichter 1 zum Einsatz im Mittel- und Hochspannungsbereich geeignet. Außerdem können die Komponenten des erfindungsgemäßen Stromrichters 1 aufgrund des modularen Aufbaus auf einfache Weise und besonders wirkungsvoll mit Kühlluft gekühlt werden.

## Patentansprüche

1. In Multilevelschaltung aufgebauter Stromrichter (1) zur Wandlung von Gleichstrom in Wechselstrom oder umgekehrt, umfassend mindestens einen Kondensator (2) und mindestens zwei Halbleiter-Leistungsschalter (3), wobei der oder jeder Kondensator (2) ein Anschlusspaar (10, 11) zum Anschluss des Kondensators (2) an mindestens zwei Halbleiter-Leistungsschalter (3) aufweist, **dadurch gekennzeichnet, dass** der oder jeder Kondensator (2) mindestens ein weiteres Anschlusspaar (10, 11) zum Anschluss des Kondensators (2) an mindestens zwei Halbleiter-Leistungsschalter (3) oder an ein Gleichstromnetz aufweist und dass in einem Abstand zu mindestens einer Außenseite (7) des oder jeden Kondensators (2) mindestens eine Kühlplatte (13) angeordnet ist.

2. Stromrichter (1) nach Anspruch 1, **dadurch gekennzeichnet, dass** die Anschlusspaare (10, 11) eines Kondensators (2) auf verschiedenen Seiten (5, 6, 7) des Kondensators (2) aus diesem herausgeführt sind.

3. Stromrichter (1) nach Anspruch 2, **dadurch gekennzeichnet, dass** der oder jeder Kondensator (2) zwei Anschlusspaare (10, 11) aufweist, die auf gegenüberliegenden Seiten (5, 6, 7) des Kondensators (2) aus diesem herausgeführt sind.

4. Stromrichter (1) nach einem der Ansprüche 1 bis 3, **dadurch gekennzeichnet, dass** jedes Anschlusspaar (10, 11) zwei Anschlusskontakte (10, 11) mit jeweils mindestens einem Anschlusselement (12) aufweist, wobei die Anschlusselemente (12) jeweils eines Anschlusskontakts (10, 11) über einen niederinduktiven flächigen Schienenleiter (18) an einen Anschluss eines Halbleiter-Leistungsschalters (3) angeschlossen sind.

5. Stromrichter (1) nach Anspruch 4, **dadurch gekennzeichnet, dass** Oberseite (5) und Unterseite (6) des oder jeden Kondensators (2) die mindestens eine Außenseite (7) des oder jeden Kondensators (2) überragende Bereiche aufweisen, an denen die mindestens eine Kühlplatte (13) befestigt ist.

6. Stromrichter (1) nach einem der Ansprüche 1 bis 5, **dadurch gekennzeichnet, dass** der Stromrichter (1) als ein Wechselrichter oder ein Gleichstromsteller ausgebildet ist.

## Claims

1. Power converter (1) constructed in a multi-level circuit for converting direct current into alternating current or vice versa, comprising at least one capacitor (2) and at least two semiconductor power switches (3), wherein the or each capacitor (2) comprises a terminal pair (10, 11) for connecting the capacitor (2) to at least two semiconductor power switches (3), **characterised in that** the or each capacitor (2) comprises at least one further terminal pair (10, 11) for connecting the capacitor (2) to at least two semiconductor power switches (3) or to a direct current network and that at least one cooling plate (13) is arranged at a distance from at least one external side (7) of the or each capacitor (2).

2. Power converter (1) according to claim 1, **characterised in that** the terminal pairs (10, 11) of a capacitor (2) are fed out therefrom on different sides (5, 6, 7) of the capacitor (2).

3. Power converter (1) according to claim 2, **characterised in that** the or each capacitor (2) has two terminal pairs (10, 11) which are fed out therefrom on opposing sides (5, 6, 7) of the capacitor (2).

4. Power converter (1) according to one of the claims 1 to 3, **characterised in that** each terminal pair (10, 11) has two terminal contacts (10, 11), each having at least one terminal element (12), wherein the terminal elements (12) of each terminal contact (10, 11) are connected via a low-inductance flat bus bar (18) to a terminal of a semiconductor power switch (3).

5. Power converter (1) according to claim 4, **characterised in that** the upper side (5) and the lower side (6) of the or each capacitor (2) which has regions which extend beyond at least one external side (7) of the or each capacitor (2) is fastened to the at least one cooling plate (13).

6. Power converter (1) according to one of the claims 1 to 5, **characterised in that** the power converter (1) is configured as an inverter or a direct current chopper.

## Revendications

1. Convertisseur multiniveau (1) pour convertir un courant continu en courant alternatif ou vice versa, comportant au moins un condensateur (2) et au moins deux interrupteurs de puissance à semi-conducteurs (3), ledit ou chacun desdits condensateurs (2) présentant une paire de connexions (10, 11) pour raccorder le condensateur (2) à au moins deux interrupteurs de puissance à semi-conducteurs (3), **caractérisé en ce que** ledit ou chacun desdits condensateurs (2) comporte au moins une autre paire de connexions (10, 11) pour raccorder le condensateur (2) à au moins deux interrupteurs de puissance à semi-conducteurs (3) ou à un réseau à courant continu et **en ce qu'**au moins une plaque de refroidissement (13) est agencée à distance d'au moins une face externe (7) du ou de chacun des condensateurs (2).

2. Convertisseur (1) selon la revendication 1, **caractérisé en ce que** les paires de connexions (10, 11) d'un condensateur (2) sortent de différentes faces (5, 6, 7) du condensateur (2).

3. Convertisseur (1) selon la revendication 2, **caractérisé en ce que** le ou chacun des condensateurs (2) comporte deux paires de connexions (10, 11) qui sortent de faces opposées (5, 6, 7) dudit condensateur (2).

4. Convertisseur (1) selon l'une quelconque des revendications 1 à 3, **caractérisé en ce que** chaque paire de connexions (10, 11) comporte deux contacts de raccordement (10, 11) avec chacun au moins un élément de raccordement (12), lesdits éléments de raccordement (12) de chaque contact de raccordement (10, 11) étant raccordés à une connexion d'un interrupteur de puissance à semi-conducteurs (3) par une barre conductrice (18) plane à faible inductance.

5. Convertisseur (1) selon la revendication 4, **caractérisé en ce que** la face supérieure (5) et la face inférieure (6) du ou de chacun des condensateurs (2) présentent des régions dépassant de la ou des faces externes (7) du ou de chaque condensateur (2), lesdites régions permettant de fixer au moins une plaque de refroidissement (13).

6. Convertisseur (1) selon l'une des revendications 1 à 5, **caractérisé en ce que** le convertisseur (1) est conçu sous la forme d'un onduleur ou d'un convertisseur direct de courant continu.
